# FASCICULE DE BREVET EUROPEEN

(11) **EP 2 804 738 B1**
(45) Date de publication et mention de la délivrance du brevet: **23.03.2016**
(21) Numéro de dépôt: 12806595.0
(22) Date de dépôt: 29.11.2012
(51) Int. Cl.: B29C 53/56, B29C 53/84, H01C 3/06, H05B 3/56

(54) **PROCEDE DE MISE EN FORME TRIDIMENSIONNELLE D'UN OBJET A PARTIR D'UN CORDON SOUPLE, CORDON POUR LA REALISATION DU PROCEDE ET OBJET AINSI REALISE**
VERFAHREN ZUR DREIDIMENSIONALEN FORMUNG EINES OBJEKTS AUS EINER SCHNUR, SCHNUR ZUR DURCHFÜHRUNG DES VERFAHRENS UND IN DIESEM VERFAHREN HERGESTELLTES OBJEKT
METHOD FOR THE THREE-DIMENSIONAL SHAPING OF AN OBJECT FROM A FLEXIBLE CORD, A CORD FOR CARRYING OUT THE METHOD AND AN OBJECT PRODUCED IN THIS WAY

(30) Priorité: 19.01.2012 FR 1250544
(43) Date de publication de la demande: 26.11.2014
(73) Titulaire: Societe Choletaise de Fabrication, 49600 Andrezé (FR)
(72) Inventeur: VERRIELE, Olivier, 49122 Begrolles-en-Mauges (FR)
(74) Mandataire: Le Cloirec, Claudine
(86) Numéro de dépôt international: PCT/FR2012/052751
(87) Numéro de publication internationale: WO 2013/107952

(56) Documents cités:
- FR-A1- 2 568 171
- GB-A- 2 004 835
- US-A1- 2004 247 866
- N.N.: "FABRICATION DE MEUBLES PAR LE PROCEDE D'ENROULEMENT FILAMENTAIRE AUTOMATISE", COMPOSITES, vol. 29, no. 1, 1989, pages 61-63, XP000051882, ISSN: 0754-0876

## Description

La présente invention concerne un procédé de mise en forme tridimensionnelle d'objets, tels que des objets peu transportables, le matériel pour la réalisation de ce procédé et les objets ainsi réalisés.

Avec le développement des ventes par correspondance, se pose le problème d'encombrement des objets à expédier : taille, volume, poids peuvent être des obstacles à l'expédition ou occasionner des frais de transports exorbitants par rapport au coût d'achat de l'objet lui-même.

Pour réduire ces frais des objets peuvent être livrés en kit, à monter soi-même. La tendance actuelle est en effet de pouvoir créer ou assembler des objets à la maison, à partir de matériaux ou d'éléments de base simples, pouvant être éventuellement préfabriqués. Très souvent, l'assemblage des objets nécessite l'usage de colle ou de vis.

On connait, par exemple, de FR 2.568.171 un procédé de réalisation d'un élément tubulaire au moyen de nappe de fibres résistantes enrobées de résine durcissable, par enroulement de ladite nappe autour d'un support tel qu'une plaque ou un mandrin, puis durcissement de ladite résine. Ce procédé nécessite l'imprégnation préalable des fibres par une résine durcissable.

Un but de la présente invention est de proposer un procédé de réalisation d'objets, simple, à partir d'éléments de base peu encombrants, notamment livrables par voie postale, le procédé pouvant s'appliquer à la réalisation d'objets tridimensionnels de grande taille comme des meubles, par exemple des sièges.

Par ailleurs, certains objets sont peu transportables ou doivent être amenés dans des lieux difficiles d'accès (montagne, souterrains...). Un autre but de la présente invention est donc de proposer un procédé de réalisation des objets sur place, par un utilisateur dans des lieux difficilement accessibles.

Un autre but de l'invention est de proposer un procédé de réalisation d'objets avec un minimum de matière première de base, ne nécessitant pas d'outil spécifique, ni de matériau adhésif.

Un autre but de l'invention est de proposer un procédé de mise en forme des objets, rapide, afin que l'usager puisse s'en servir à bref délai après sa réalisation.

A cet effet, la présente invention concerne un procédé de mise en forme tridimensionnelle d'objets, tels que des objets peu transportables, caractérisé en ce qu'il est réalisé à partir de cordon(s) souple(s) et comprend les étapes successives suivantes :
- mise en place sur un élément support, tel qu'un gabarit, d'au moins un cordon souple, ledit cordon incorporant une résistance électrique chauffante entourée d'au moins un premier ensemble de fils en matériau polymère thermoplastique,
- raccordement du cordon souple à une alimentation électrique pendant une durée donnée provoquant le ramollissement du polymère thermoplastique d'au moins le premier ensemble de fils entourant la résistance chauffante, le cordon venant épouser la forme imposée par l'élément support,
- refroidissement du cordon,
- éventuellement retrait de l'élément support pour obtenir l'objet en trois dimensions, indépendant de l'élément support.

Le matériau de base est uniquement un cordon souple, peu encombrant, permettant la réalisation d'objets variés selon un choix infini notamment de formes, de couleurs, d'aspect, de dimensions.

Par cordon souple, on entend ici tout élément de forme allongée, incorporant une résistance électrique chauffante et au moins un premier ensemble de fils thermoplastiques, les fils pouvant être tressés ou tissés, revêtu d'une gaine de forme tubulaire (telle une corde) ou sensiblement plane (telle une sangle) en fils tressés ou tissés.

L'élément support peut être un gabarit de forme quelconque permettant par exemple l'enroulement du cordon autour de ce dernier, ou un système d'accrochage, par exemple pour réaliser un objet de forme allongée telle qu'une échelle d'accès.

La réalisation de l'objet ne prend que quelques minutes, correspondant à la mise en place sur le support, au chauffage du cordon, puis à son refroidissement. Il ne nécessite pas la mise en oeuvre de colle ou d'autres produits pouvant souiller ou tacher le lieu d'assemblage, ni nécessiter d'autres outils spécifiques, ni de moyens d'assemblage autres qu'un raccordement à une alimentation électrique. L'objet est ainsi réalisable proprement et est rapidement utilisable. Il est en outre confectionné avec un minimum de matière première.

Une fois le support retiré, l'objet mis en volume peut être uniquement constitué du ou des dit(s) cordon(s), ce qui lui donne un aspect léger et aérien, les segments du ou des dits cordon(s) pouvant être espacés les uns des autres. L'objet est stable, même si les segments de cordon adjacents sont écartés les uns des autres, sans zones jointives.

La présente invention concerne également ledit cordon souple pour la réalisation du procédé décrit ci-dessus qui est caractérisé en ce que le cordon souple comprend une résistance électrique chauffante entourée d'au moins un premier ensemble de fils (par exemple une première couche de fils tressés ou tissés) en matériau polymère thermoplastique, ledit premier ensemble de fils étant lui-même entouré d'une gaine protectrice, de préférence également en fils. Comme indiqué ci-dessus, les fils de la gaine peuvent être tissés ou tressés.

Par entourée, on entend ici le fait que la résistance électrique sert soit d'âme au premier ensemble de fils thermoplastiques (par tressage, tissage ou guipage), ou cette résistance électrique est tressée ou tissée avec les fils thermoplastiques, de manière à ce que ces fils soient en contact avec la dite résistance électrique, permettant leur ramollissement lors du passage du courant dans la résistance. Les avantages d'un ensemble de fils, notamment sous forme de tissage, tressage ou guipage, par rapport à une couche continue en matériau thermoplastique sont principalement la souplesse et la flexibilité du cordon, ainsi que les multiples possibilités d'élaboration d'un tel entourage en termes d'épaisseur de fil, de serrage dudit fil pour constituer la tresse, le tissage ou le guipage, la combinaison d'éventuels fils de différentes natures, et l'épaisseur finale de l'ensemble, selon le nombre de passages du ou des fil(s).

Selon un mode de réalisation avantageux, la résistance électrique est composée d'au moins un fil métallique constituant l'âme du premier ensemble de fils en polymère thermoplastique, assemblés par tressage ou tissage.

Selon le diamètre du fil métallique et sa nature, on peut prévoir en variante plusieurs fils métalliques en âme ou tressés avec les premiers fils thermoplastiques du premier ensemble de fils. Ces fils peuvent être disposés parallèles, selon l'axe du cordon, ou retordus ensemble.

De manière avantageuse, le cordon souple comporte au moins une couche intermédiaire de fils tressés ou tissés en polymère thermoplastique entourant un ensemble ou une pluralité d'ensembles formé(s) par la résistance électrique et le premier ensemble de fils thermoplastiques.

Les premiers fils thermoplastiques (par exemple première tresse) destinés à être ramollis lors du chauffage peuvent ainsi être séparés de la gaine protectrice extérieure. Selon la taille du diamètre final recherché pour le cordon, ledit cordon peut ainsi comprendre une superposition de plusieurs couches coaxiales intermédiaires en fils tressés ou tissés. Ces couches intermédiaires servent également à éviter au fil électrique interne de se rompre lors de la manipulation du cordon, notamment lors de son transport ou de son positionnement sur le gabarit.

Le fil métallique formant la résistance électrique est un fil choisi parmi l'inox, l'acier le fer, le cuivre ou le carbone.

Le polymère thermoplastique constituant les fils en matériau polymère (fils qui sont au contact de la résistance électrique et fils de la (ou des) couche(s) intermédiaire(s)) est choisi parmi le polyamide, le polyester, le polypropylène, ou le polycarbonate. Ces fils en polymère peuvent être à haute ténacité. Il n'est pas obligatoire que toutes les couches soient en polymère de même nature. Une graduation, par exemple dans la résistance à la chaleur de l'intérieur vers l'extérieur du cordon, peut être notamment envisagée.

Les fils de la gaine protectrice, de préférence des fils tressés ou tissés, sont avantageusement des fils de lin, de coton ou d'autre(s) matière(s) non fusible(s). L'avantage du lin est de présenter une bonne résistance mécanique et d'être isolant ; l'avantage du coton est d'offrir de nombreuses couleurs. Les fibres de verre, ou de carbone, ou encore de Kervlar®, polyamide aromatique résistant à la chaleur et à faible conductivité thermique, pourraient également être utilisées pour réaliser la gaine protectrice externe.

La présente invention concerne également un kit pour la réalisation d'un objet tridimensionnel selon le procédé de la présente invention, caractérisé en ce qu'il comprend au moins un cordon souple, tel que décrit ci-dessus, de longueur suffisante pour la réalisation dudit objet tridimensionnel, des moyens de raccordement de l'extrémité du cordon à un transformateur ou une alimentation électrique, et éventuellement un élément support, tel qu'un gabarit.

Un tel kit peut se loger facilement dans un sac et/ou peut être facilement expédié par voie postale. Son encombrement est minimal puisque le cordon peut être plié ainsi que le gabarit qui peut se présenter, par exemple, en matériau cartonné.

La présente invention concerne également un objet tridimensionnel, formé d'un agencement de cordons tressés disposés selon des segments adjacents ou croisés, de manière à former au moins une surface d'appui, le cordon étant tel que décrit ci-dessus et l'objet étant réalisé au moyen du procédé décrit précédemment.

Cet objet peut être constitué exclusivement d'un cordon conforme à celui décrit ci-dessus. Il est ainsi très léger, résistant, et réalisé avec un minimum de matière.

Parmi lesdits objets, on peut citer, sans que la liste soit limitative, des meubles, tels que des sièges, des échelles de secours, ...

L'invention va être décrite plus en détail à l'aide d'exemples illustratifs en se référant aux figures dans lesquelles :
La figure 1 est un schéma de vue de côté éclatée d'un exemple de cordon permettant la réalisation du procédé selon la présente invention ;
La figure 2 est un schéma en coupe transversale du cordon de la figure 1 ;
La figure 3 est un schéma en coupe transversale d'une variante du cordon selon l'invention ;
La figure 4 présente les pièces constituant un exemple de gabarit ;
La figure 5 est une vue en perspective du gabarit de la figure 4 à l'état assemblé ;
La figure 6 est une vue en perspective du cordon entourant le gabarit ;
La figure 7 est une vue en perspective d'un ensemble cordon/gabarit replié ;
La figure 8 montre l'ensemble gabarit/cordon logé dans un sac ;
La figure 9 montre le dépliage de l'ensemble gabarit/cordon ;
La figure 10 illustre le branchement de l'ensemble gabarit/cordon déplié à une alimentation électrique ;
La figure 11 montre le siège final réalisé, utilisable par l'acheteur ;
Les figures 12 et 13 sont des croquis en perspective présentant deux variantes de réalisation du siège présenté à la figure 11.

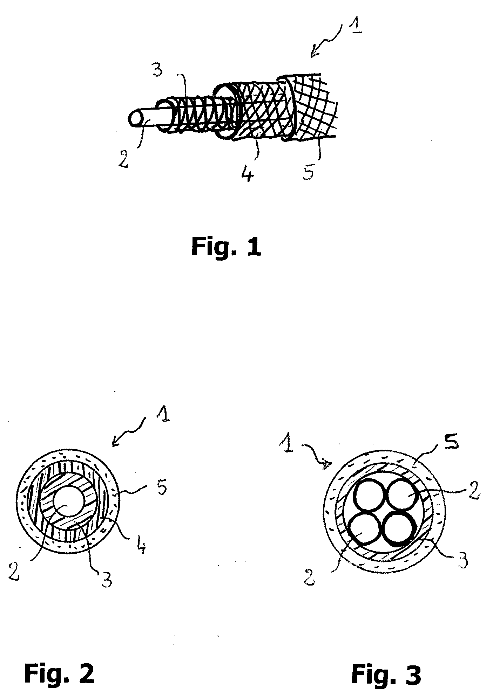

En se référant aux figures, le cordon 1, selon la présente invention, comporte une âme 2 en matériau métallique recouverte d'un premier ensemble 3 en fils tressés, dénommée première tresse, d'une couche intermédiaire 4 en fils tressés, dénommée tresse intermédiaire, l'ensemble étant entouré d'une gaine de protection 5 extérieure de forme tubulaire, comme visible sur la figure 1 montrant un cordon en vue éclatée.

La figure 2 schématise, en coupe transversale, le cordon conforme à la figure 1, le matériau constituant le premier ensemble 3 et la couche intermédiaire 4, peut être en matériau différent.

De préférence, la gaine de protection 5 extérieure peut être également en fils tressés, tels qu'en fils de lin ou en fils de coton pour un aspect extérieur agréable pour l'utilisateur, pour une isolation thermique et électrique ainsi que pour maintenir les couches polymères en place à l'intérieur dudit cordon.

Selon une autre variante, schématisée en coupe transversale à la figure 3, le cordon 1 selon l'invention comporte plusieurs fils métalliques 2 disposés axialement, parallèles ou retordus (éventuellement avec des fils en polymère thermoplastique). Cette pluralité de fils métalliques 2 est enfermée dans un premier ensemble 3 en fils tressés, cet ensemble étant entouré d'une gaine protectrice 5. Une ou plusieurs couches intermédiaires peuvent être prévues entre la première tresse du premier ensemble 3 et la gaine de protection 5.

Le cordon 1, dont les variantes sont présentées aux figures 1 à 3 selon des exemples non limitatifs, constitue l'élément de base de l'objet à réaliser selon le procédé de la présente invention. Les figures suivantes 4 à 11 montrent les principales étapes de ce procédé.

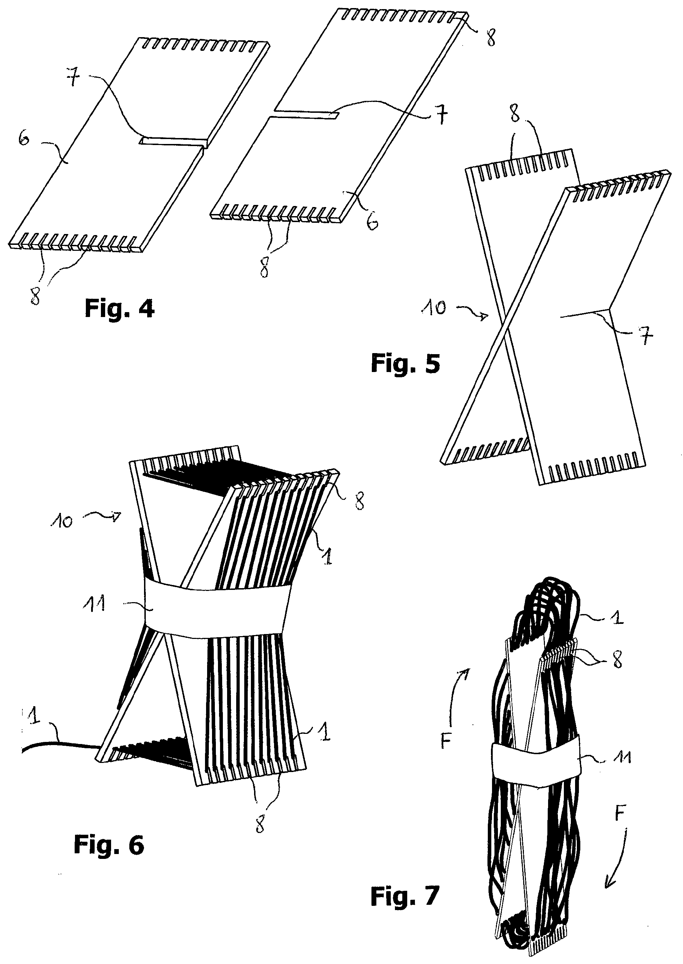

Un gabarit 10 est constitué ici de deux plaques 6 cartonnées de même forme, pourvues chacune d'une fente médiane 7 permettant leur emboîtement respectif en formant un X comme présenté à la figure 5. Les extrémités de chacune des plaques 6 présentent une succession d'encoches 8 aptes à recevoir le cordon 1 par bobinage de ce dernier sur le gabarit 10 déplié (voir figure 6).

Le bobinage du cordon 1 autour du gabarit 10 peut être par exemple resserré dans sa partie centrale par une sangle 11 décorative comme schématisé sur la figure 6.

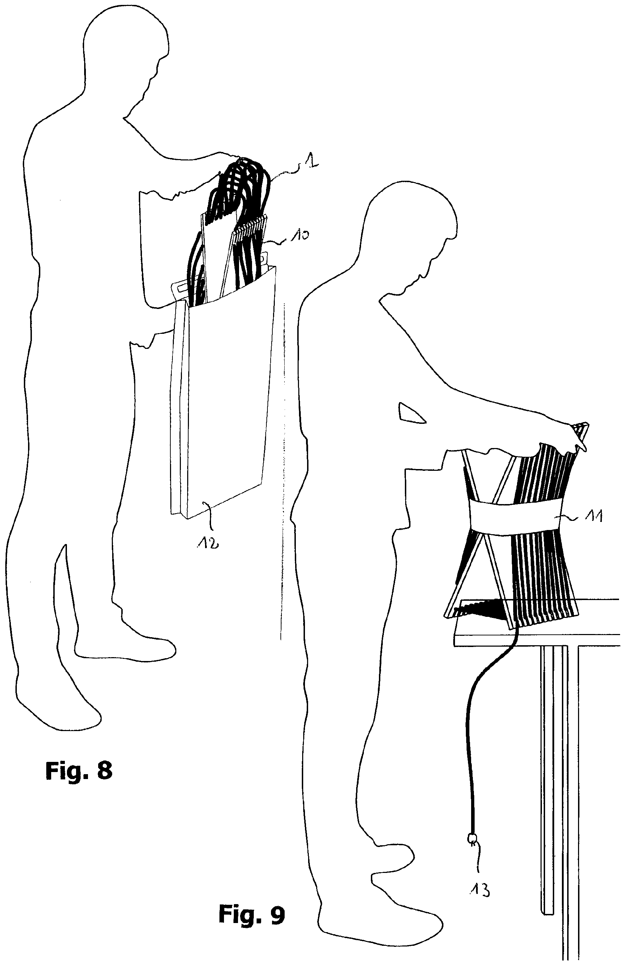

Après mise en place du cordon 1 sur le gabarit 10, ce dernier peut être replié par rapprochement des deux plaques cartonnées 6, comme schématisé par les flèches F de la figure 7. L'ensemble peut, ainsi, être mis à plat et logé, comme visible sur la figure 8, dans un sac de transport 12. Ce sac de transport permet de transporter à plat et d'expédier, par exemple par voie postale, le kit comprenant le gabarit, le cordon enroulé sur ledit gabarit et les moyens de raccordement électrique 13.

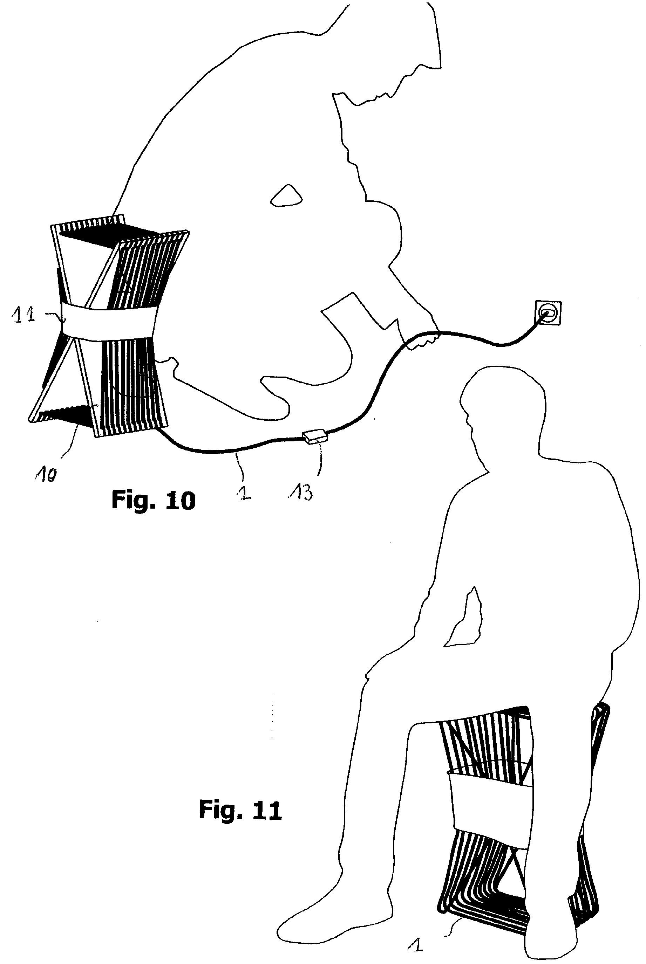

Lorsque l'acheteur reçoit, à domicile, le kit, après l'avoir sorti du sac 12, il déplie le gabarit 10 (voir figure 9) et connecte à une alimentation électrique (voir figure 10) le cordon 1.

Après passage du courant électrique, durant quelques secondes ou minutes, au travers du fil métallique servant de résistance électrique en âme du cordon, au moins le premier ensemble 3 en fils tressés en matériau polymère thermoplastique est ramolli, assouplissant encore l'ensemble du cordon qui prend ainsi aisément la forme imposée par le gabarit, et éventuellement la sangle 11. Après refroidissement et rigidification du cordon, le gabarit peut être retiré et le cordon rigidifié servir de siège comme visible sur la figure 11.

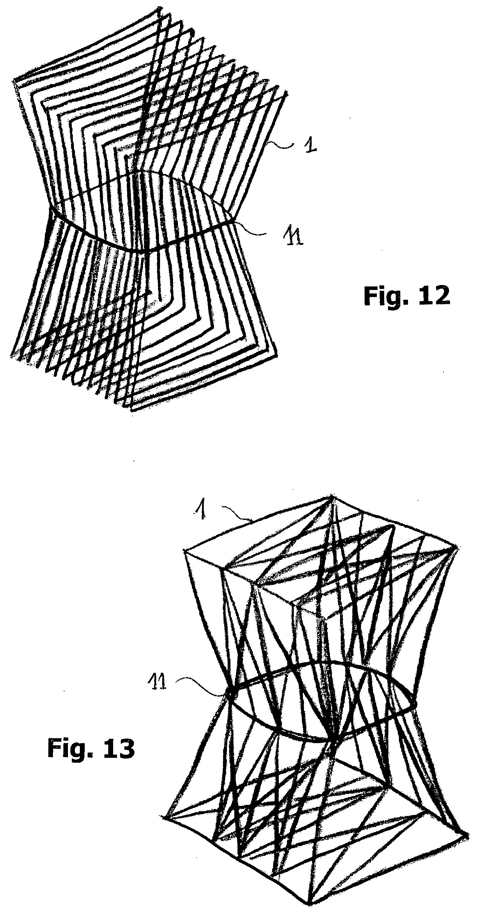

Les figures 12 et 13 sont des croquis montrant deux agencements possibles, parmi une multitude d'agencements envisageables, pour la répartition des éléments de cordon. Une fois l'objet tridimensionnel réalisé, ce dernier, dans les exemples représentés, pouvant servir de siège ou plus spécifiquement de tabouret.

En tant qu'exemple de mise en oeuvre du procédé selon l'invention, on a réalisé un cordon comprenant trois fils métalliques d'inox de diamètre 0,28 mm retordus ensemble et formant l'âme d'un premier ensemble en fils tressés de polypropylène 1000, lui-même recouvert d'une nouvelle tresse, également en polypropylène, constituant une couche intermédiaire 4. La dimension de cet ensemble âme/première tresse/deuxième tresse présente un diamètre extérieur de 5 mm environ. Cet ensemble est ensuite revêtu d'une tresse en lin naturel pour présenter un diamètre final de 6,50 mm. Après installation sur le gabarit et raccordement à une alimentation électrique sous 20 Volts et 3 Ampères, le temps de chauffe appliqué a été de 2 min à 5 min permettant de ramollir l'ensemble du cordon. Après refroidissement d'environ 3 minutes, puis retrait du gabarit, le cordon mis en forme était à lui seul suffisamment rigide pour servir de siège à l'opérateur.

## Revendications

1. Procédé de mise en forme tridimensionnelle d'objets, tels que des objets peu transportables,
**caractérisé en ce qu'**il est réalisé à partir de cordon(s) souple(s) et comprend les étapes successives suivantes :
- mise en place sur un élément support, tel qu'un gabarit (10), d'au moins un cordon (1) souple, ledit cordon (1) incorporant une résistance électrique chauffante entourée d'au moins un premier ensemble (3) de fils en matériau polymère thermoplastique,
- raccordement du cordon (1) souple à une alimentation électrique pendant une durée donnée provoquant le ramollissement du polymère thermoplastique d'au moins le premier ensemble (3) de fils entourant la résistance chauffante, le cordon venant épouser la forme imposée par l'élément support (10),
- refroidissement du cordon,
- éventuellement retrait de l'élément support (10) pour obtenir l'objet en trois dimensions, indépendant de l'élément support.

2. Cordon (1) souple pour la réalisation du procédé selon la revendication 1,
**caractérisé en ce qu'**il comprend une résistance électrique (2) chauffante entourée d'au moins un premier ensemble de fils en matériau polymère thermoplastique, ledit premier ensemble (3) de fils étant lui-même entouré d'une gaine (5) protectrice, de préférence également en fils.

3. Cordon souple selon la revendication 2,
**caractérisé en ce que** la résistance électrique (2) est composée d'au moins un fil métallique constituant l'âme du premier ensemble (3) de fils en polymère thermoplastique, assemblés par tressage ou tissage.

4. Cordon souple selon l'une des revendications 2 ou 3,
**caractérisé en ce qu'**il comporte au moins une couche intermédiaire (4) de fils tressés ou tissés en polymère thermoplastique entourant un ensemble ou une pluralité d'ensembles formé(s) par la résistance électrique et le premier ensemble (3) de fils thermoplastiques.

5. Cordon souple selon l'une des revendications 3 ou 4,
**caractérisé en ce que** le fil métallique formant la résistance électrique (2) est un fil choisi parmi l'inox, l'acier, le fer, le cuivre ou le carbone.

6. Cordon souple selon l'une des revendications 2 à 5,
**caractérisé en ce que** le polymère thermoplastique constituant les fils en matériau polymère est choisi parmi le polyamide, le polyester, le polypropylène ou le polycarbonate.

7. Cordon souple selon l'une des revendications 2 à 6,
**caractérisé en ce que** les fils de la gaine protectrice (5), de préférence des fils tressés ou tissés, sont des fils de lin ou de coton, ou d'autre(s) matière(s) non fusible(s).

8. Kit pour la réalisation d'un objet tridimensionnel selon le procédé de la revendication 1,
**caractérisé en ce qu'**il comprend au moins un cordon (1) souple conforme à l'une quelconque des revendications 2 à 7, de longueur suffisante pour la réalisation dudit objet tridimensionnel, des moyens de raccordement (13) de l'extrémité du cordon à un transformateur ou une alimentation électrique, et éventuellement un élément support, tel qu'un gabarit (10).

9. Objet tridimensionnel, formé d'un agencement d'au moins un cordon (1) disposé selon des segments adjacents ou croisés, de manière à former au moins une surface d'appui, le cordon étant conforme à l'une quelconque des revendications 2 à 7 et l'objet étant réalisé au moyen du procédé selon la revendication 1.

10. Objet selon la revendication 9 **caractérisé en ce qu'**il est constitué exclusivement d'un cordon (1) conforme à l'une des revendications 2 à 7.

## Patentansprüche

1. Verfahren zum dreidimensionalen Formen von Objekten, wie von schwierig zu transportierenden Objekten,
**dadurch gekennzeichnet, dass** es mit elastischer Schnur/elastischen Schnüren durchgeführt wird und die folgenden aufeinanderfolgenden Schritte umfasst:
- Bereitstellen auf einem Trägerelement wie eine Schablone (10) mindestens einer elastischen Schnur (1), wobei die Schnur (1) einen elektrischen Heizwiderstand inkorporiert, der von mindestens einer ersten Einheit (3) von Fäden aus thermoplastischem Polymermaterial umgeben ist,
- Verbinden der elastischen Schnur (1) mit einer elektrischen Versorgung während einer bestimmten Dauer, wodurch die Erweichung des thermoplastischen Polymers mindestens der ersten Einheit (3) von Fäden bewirkt wird, die den Heizwiderstand umgeben, wobei die Schnur die von dem Trägerelement (10) vorgeschriebene Form annimmt,
- Abkühlen der Schnur,
- eventuell Entfernen des Trägerelements (10), um unabhängig vom Trägerelement das dreidimensionale Objekt zu erhalten.

2. Elastische Schnur (1) für die Durchführung des Verfahrens nach Anspruch 1,
**dadurch gekennzeichnet, dass** sie einen elektrischen Heizwiderstand (2) umfasst, der von mindestens einer ersten Einheit von Fäden aus thermoplastischem Polymermaterial umgeben ist, wobei die erste Einheit (3) von Fäden wiederum von einer Schutzhülle (5) umgeben ist, die vorzugsweise ebenfalls aus Fäden ist.

3. Elastische Schnur nach Anspruch 2,
**dadurch gekennzeichnet, dass** der elektrische Widerstand (2) aus mindestens einem Metalldraht zusammengesetzt ist, der die Seele der ersten Einheit (3) von Fäden aus thermoplastischem Polymer bildet, die durch Flechten oder Weben verbunden sind.

4. Elastische Schnur nach einem der Ansprüche 2 oder 3,
**dadurch gekennzeichnet, dass** sie mindestens eine Zwischenschicht (4) aus geflochtenen oder gewebten Fäden aus thermoplastischem Polymer aufweist, die eine Einheit oder eine Vielzahl von Einheiten umgibt, die von dem elektrischen Widerstand und der ersten Einheit (3) von thermoplastischen Fäden gebildet ist.

5. Elastische Schnur nach einem der Ansprüche 3 oder 4,
**dadurch gekennzeichnet, dass** der den elektrischen Widerstand (2) bildende Metalldraht ein Draht ist, der aus dem rostfreien Stahl, dem Stahl, dem Eisen, dem Kupfer oder dem Karbon ausgewählt ist.

6. Elastische Schnur nach einem der Ansprüche 2 bis 5,
**dadurch gekennzeichnet, dass** das die Fäden aus Polymermaterial bildende thermoplastische Polymer aus dem Polyamid, dem Polyester, dem Polypropylen oder dem Polycarbonat ausgewählt ist.

7. Elastische Schnur nach einem der Ansprüche 2 bis 6,
**dadurch gekennzeichnet, dass** die Fäden der Schutzhülle (5), vorzugsweise geflochtene oder gewebte Fäden, Fäden aus Leinen oder aus Baumwolle oder aus (einem) anderen nicht schmelzbaren Material(ien) sind.

8. Set für die Herstellung eines dreidimensionalen Objekts nach dem Verfahren von Anspruch 1,
**dadurch gekennzeichnet, dass** es mindestens eine elastische Schnur (1) nach einem der Ansprüche 2 bis 7 in ausreichender Länge für die Herstellung des dreidimensionalen Objekts, Anschlussmittel (13) des Endes der Schnur an einen Transformator oder eine elektrische Versorgung und eventuell ein Trägerelement wie eine Schablone (10) umfasst.

9. Dreidimensionales Objekt, gebildet aus einer Anordnung von mindestens einer gemäß benachbarten oder gekreuzten Segmenten angeordneten Schnur (1), so dass mindestens eine Stützfläche gebildet wird, wobei die Schnur einem der Ansprüche 2 bis 7 entspricht und das Objekt mit Hilfe des Verfahrens nach Anspruch 1 hergestellt ist.

10. Objekt nach Anspruch 9, **dadurch gekennzeichnet, dass** es ausschließlich aus einer Schnur (1) nach einem der Ansprüche 2 bis 7 gebildet ist.

## Claims

1. A method of three-dimensionally shaping articles such as articles that are difficult to transport, the method being **characterized in that** it is performed using flexible cord(s) and comprises the following successive steps:
placing at least one flexible cord (1) on a support element such as a former (10), said cord (1) incorporating a heating electrical resistance surrounded by at least a first set (3) of yarns of thermoplastic polymer material;
• connecting the flexible cord (1) to an electrical power supply for a given duration to cause the thermoplastic polymer of at least the first set (3) of yarns surrounding the heating resistance to soften, the cord then taking on the shape imposed by the support element (10);
• cooling the cord; and
• optionally removing the support element (10) in order to obtain the three-dimensional object independently of the support element.

2. A flexible cord (1) for performing the method of claim 1, the cord being **characterized in that** it comprises a heating electrical resistance (2) surrounded by at least a first set of yarns of thermoplastic polymer material, said first set (3) of yarns itself being surrounded by a protective sheath (5), preferably also made of yarns.

3. A flexible cord according to claim 2, **characterized in that** the electrical resistance (2) is made up of at least one metal wire constituting the core of the first set (3) of thermoplastic polymer yarns that are assembled together by braiding or weaving.

4. A flexible cord according to claim 2 or claim 3, **characterized in that** it includes at least one intermediate layer (4) of braided or woven thermoplastic polymer yarns surrounding a set or a plurality of sets formed by the electrical resistance and the first set (3) of thermoplastic yarns.

5. A flexible cord according to claim 3 or claim 4, **characterized in that** the metal wire forming the electrical resistance (2) is a wire selected from stainless steel, steel, iron, copper, and carbon.

6. A flexible cord according to any one of claims 2 to 5, **characterized in that** the thermoplastic polymer constituting the polymer material yarns is selected from polyamide, polyester, polypropylene, and polycarbonate.

7. A flexible cord according to any one of claims 2 to 6, **characterized in that** the yarns of the protective sheath (5), preferably braided or woven yarns, are yarns of linen or cotton, or of other non-meltable materials.

8. A kit for making a three-dimensional article using the method of claim 1, the kit being **characterized in that** it comprises at least one flexible cord (1) in accordance with any one of claims 2 to 7 and of length sufficient for making said three-dimensional article, connection means (13) for connecting the end of the cord to a transformer or an electrical power supply, and optionally a support element such as a former (10).

9. A three-dimensional article formed by arranging at least one cord (1) arranged in adjacent or crossing segments so as to form at least one bearing surface, the cord being in accordance with any one of claims 2 to 7 and the article being made by the method of claim 1.

10. An article according to claim 9, **characterized in that** it is constituted solely by a cord (1) in accordance with any one of claims 2 to 7.
